# EUROPÄISCHE PATENTSCHRIFT

(11) **EP 1 197 258 B1**
(45) Veröffentlichungstag und Bekanntmachung des Hinweises auf die Patenterteilung: **22.12.2010**
(21) Anmeldenummer: 01122824.4
(22) Anmeldetag: 22.09.2001
(51) Int. Cl.: B01D 53/22, F02C 3/34

(54) **Verfahren zum Betrieb einer Kraftwerksanlage**
Method of operating a power generation system
Procédé pour le fonctionnement d'un systeme de production d'energie

(30) Priorität: 13.10.2000 US 239938 P; 21.03.2001 CH 5152001
(43) Veröffentlichungstag der Anmeldung: 17.04.2002
(73) Patentinhaber: Alstom Technology Ltd, 5400 Baden (CH)
(72) Erfinder: Griffin, Timothy Albert, Dr., 5408 Ennetbaden (CH); Winkler, Dieter, 79787 Lauchringen (DE)

(56) Entgegenhaltungen:
- EP-A- 0 953 748
- WO-A-00/33942
- WO-A-98/55208

## Beschreibung

### Technisches Gebiet

Die Erfindung betrifft ein Verfahren zum Betrieb einer Kraftwerksanlage mit einem geschlossenen oder quasi geschlossenen CO₂-Prozess mit den Merkmalen des Oberbegriffs des Anspruchs 1. Die Erfindung betrifft außerdem eine Kraftwerksanlage mit den Merkmalen des Oberbegriffs des Anspruchs 7.

### Stand der Technik

Eine derartige Kraftwerksanlage sowie ein Verfahren zum Betrieb einer solchen Kraftwerksanlage sind beispielsweise aus der WO 98/55208 bekannt. Die bekannte Kraftwerksanlage weist in ihrem CO₂-Kreis eine Turbine auf, die über eine gemeinsame Welle einen Verdichter und einen Generator antreibt. Des weiteren sind ein Rekuperator oder Wärmetauscher sowie eine Brennereinheit vorgesehen, wobei diese Brennereinheit bei der bekannten Kraftwerksanlage aus einem ersten Brenner, einer Sauerstofftrenneinrichtung und einem zweiten Brenner besteht. Der Brennereinheit wird sauerstoffhaltiges Gas, zum Beispiel komprimierte Umgebungsluft, ein komprimiertes, erwärmtes CO₂-Medium des CO₂-Prozesses und Kraftstoff zugeführt. Die Sauerstofftrenneinrichtung enthält Sauerstofftrennmittel, die dem sauerstoffhaltigen Gas Sauerstoff entnehmen und dem CO₂-Medium zuführen. Die Sauerstofftrenneinrichtung reduziert somit einerseits den Sauerstoffgehalt des sauerstoffhaltigen Gases und reichert andererseits das CO₂-Medium mit Sauerstoff an. Das mit Sauerstoff angereicherte CO₂-Medium wird in dem der Sauerstofftrenneinrichtung nachgeschalteten zweiten Brenner zusammen mit dem Kraftstoff verbrannt, wobei heißes CO₂-Medium entsteht. Dieses heiße CO₂-Medium wird der Turbine zugeführt und dort entspannt. Das entspannte CO₂-Medium wird dann dem Rekuperator zugeführt, in dem es abkühlt. Das entspannte und abgekühlte CO₂-Medium wird danach dem Verdichter zugeführt und anschließend im Rekuperator erwärmt. Das erwärmte und verdichtete CO₂-Medium wird dann wieder der Eingangsseite der Sauerstofftrenneinrichtung zugeleitet. Insoweit ergibt sich ein geschlossener oder quasi geschlossener CO₂-Prozess, dem das schädliche CO₂ mit relativ geringem Aufwand und ohne Gefahr für die Umwelt entnommen werden kann. Dementsprechend können bei einer solchen Kraftwerksanlage die CO₂-Emissionen bei der Verbrennung fossiler Kraftstoffe erheblich reduziert werden.

Der Kerngedanke einer Kraftwerksanlage mit CO₂-Prozess ist darin zu sehen, dass dem CO₂-Medium für die Verbrennung reiner Sauerstoff als Oxidationsmittel zugeführt wird. Durch den Verbrennungsvorgang mit molekularem Sauerstoff entsteht ein Abgas, das im wesentlichen nur aus CO₂ und H₂O besteht, wodurch sich die Nachbehandlung dieses CO₂-Mediums, um beispielsweise das H₂O zu entziehen oder um CO₂ zu entnehmen, erheblich vereinfacht.

Da Sauerstoff, der in Kälteanlagen erzeugt wird, sehr teuer ist, wurden neue Technologien zur Sauerstoffherstellung entwickelt. Hierbei sind Sauerstofftrenneinrichtungen von Bedeutung, die mit einer für Sauerstoffionen und für Elektronen leitenden Membran, sogenannte MCM-Membran (Mixed Conducting Membrane) ausgestattet sind. Eine derartige MCM-Membran besitzt eine Rückhalteseite, auf der sich das sauerstoffhaltige Gas befindet, sowie eine Durchgangsseite, auf der sich das anzureichernde Gas, zum Beispiel CO₂-Medium, befindet. Die MCM-Membran transportiert Sauerstoffionen von der Rückhalteseite auf die Durchgangsseite und bewirkt einen Elektronentransport von der Durchgangsseite zur Rückhalteseite. Hierdurch wird dem Gas auf der Rückhalteseite Sauerstoff entzogen und dem Gas auf der Durchgangsseite zugeführt. Um die Leistungsfähigkeit einer solchen MCM-Membran zu erhöhen, ist es vorteilhaft, auf der Durchgangsseite eine relativ hohe Strömungsgeschwindigkeit einzustellen, damit die Sauerstoffkonzentration auf der Durchgangsseite möglichst niedrig ist. Für eine lange Lebensdauer der MCM-Membran ist es von Vorteil, die folgenden Verfahrensschritte unabhängig voneinander in separaten Einheiten durchzuführen: Erwärmen des sauerstoffhaltigen Gases, Erwärmen des CO₂-Mediums, Transportieren des Sauerstoffs vom sauerstoffhaltigen Gas zum CO₂-Medium und Verbrennen des mit Sauerstoff angereicherten CO₂-Mediums mit Kraftstoff. Durch die funktionale Trennung dieser Vorgänge können die einzelnen Verfahrensschritte separat optimiert werden, um den Wirkungsgrad der gesamten Vorrichtung zu erhöhen, wobei insbesondere die Lebensdauer der MCM-Membran erhöht werden kann. Für den Wirkungsgrad der Anlage ist es von besonderer Bedeutung, dass die Sauerstofftrenneinrichtung bzw. deren MCM-Membran eine optimale Betriebstemperatur aufweist, die relativ hoch ist. Damit die MCM-Membran ihre hohe Betriebstemperatur erreicht, wird bei der bekannten Kraftwerksanlage das CO₂-Medium in dem der Sauerstofftrenneinrichtung vorgeschalteten ersten Brenner vorgewärmt. Auch das sauerstoffhaltige Gas wird in einem der Sauerstofftrenneinrichtung vorgeschalteten dritten Brenner erwärmt.

Aus der WO 98/55394 ist eine Kraftwerksanlage bekannt, bei der die Sauerstofftrenneinrichtung als sogenannter Membran-Reaktor ausgebildet ist, bei dem die Anreicherung des CO₂-Mediums mit Sauerstoff und die Verbrennung mit dem Kraftstoff mehr oder weniger gleichzeitig stattfinden. Ein derartiger Membran-Reaktor entspricht im wesentlichen einer Sauerstofftrenneinrichtung mit MCM-Membran, die jedoch bei erheblich höheren Temperaturen betrieben wird.

Die WO 00/33942 offenbart eine Kraftwerkanlage mit einem geschlossenen CO₂-Prozess umfassend einer Kaskade von Brennern und jeweils davor angeordneten Sauerstofftrennmembranen.

Aus der EP 0 953 748 A1 ist eine Kraftwerksanlage bekannt, bei der das CO₂-Medium mit Sauerstoff angereichert wird, der nicht mit einer Sauerstofftrenneinrichtung, die mit einer MCM-Membran arbeitet, sondern mit einer Kälteanlage erzeugt wird.

Eine weitere Kraftwerksanlage mit CO₂-Prozess, bei der die Sauerstoffanreicherung mit kryotechnisch hergestelltem Sauerstoff erfolgt, ist aus der EP 0 939 199 A1 bekannt.

Aus der US 5 976 223 ist eine Vorrichtung zur Herstellung von Kohlendioxid und Sauerstoff bekannt, die mit zwei Sauerstofftrenneinrichtungen arbeitet, die jeweils mit einer MCM-Membran ausgestattet sind. Bei der ersten Sauerstofftrenneinrichtung, die als Membran-Reaktor arbeitet, wird auf der Rückhalteseite der MCM-Membran komprimiertes, erhitztes und sauerstoffhaltiges Gas eingeleitet. Auf der Durchgangsseite wird ein gasförmiger Kraftstoff eingebracht, der mit dem zugeführten Sauerstoff reagiert und Kohlendioxid bildet. Das bezüglich seines Sauerstoffgehaltes reduzierte sauerstoffhaltige Gas wird durch die dabei ablaufende exotherme Reaktion erhitzt. Das so erhitzte sauerstoffhaltige Gas wird dann der zweiten Sauerstofftrenneinrichtung auf deren Rückhalteseite zugeführt. Auf der Durchgangsseite dieser zweiten Sauerstofftrenneinrichtung sammelt sich dann der gewünschte Sauerstoff.

Weitere Verfahren und Vorrichtungen, die mit MCM-Membranen arbeitende Sauerstofftrenneinrichtungen aufweisen, sind beispielsweise aus der EP 0 882 486 A1 und aus der US 5 865 878 bekannt.

### Darstellung der Erfindung

Die vorliegende Erfindung beschäftigt sich mit dem Problem, für ein Verfahren bzw. für eine Kraftwerksanlage der eingangs genannten Art eine Ausführungsform anzugeben, bei der das Erreichen bzw. das Einhalten einer optimalen Betriebstemperatur für die Sauerstofftrenneinrichtung verbessert ist.

Erfindungsgemäß wird dieses Problem durch ein Verfahren mit den Merkmalen des Anspruchs 1 gelöst. Die Erfindung beruht auf dem allgemeinen Gedanken, einen Teil des mit Sauerstoff angereicherten CO₂-Mediums in einem der Sauerstofftrenneinrichtung nachgeschalteten zusätzlichen Brenner zu verbrennen und das dabei gebildete heiße CO₂-Medium dem noch nicht mit Sauerstoff angereicherten CO₂-Medium vor der Sauerstofftrenneinrichtung zuzumischen. Durch diese Maßnahme kann die Temperatur des in die Sauerstofftrenneinrichtung eingeleiteten CO₂-Mediums so weit erhöht werden, dass eine optimale Betriebstemperatur für die Sauerstofftrenneinrichtung einstellbar bzw. einregelbar ist. Insbesondere können dadurch Wärmeverluste ausgeglichen werden. Durch die Optimierung der Betriebstemperatur der Sauerstofftrenneinrichtung kann deren Wirkungsgrad und somit auch der Wirkungsgrad der Kraftwerksanlage erhöht werden.

Bei einer Weiterbildung kann die Brennereinheit einen Wärmetauscher aufweisen, der einerseits vom CO₂-Medium stromauf der Sauerstofftrenneinrichtung und andererseits vom CO₂-Medium stromab der Sauerstofftrenneinrichtung durchströmt wird, wobei durch die Verbrennung im Zusatzbrenner gebildetes heißes CO₂-Medium dem im Wärmetauscher erwärmten CO₂-Medium stromab des Wärmetauschers zugemischt wird. Die Erwärmung des der Sauerstofftrenneinrichtung zugeführten CO₂-Mediums erfolgt somit hauptsächlich im Wärmetauscher, wobei wenig Fremdenergie erforderlich ist. Durch den Zusatzbrenner werden dann im wesentlichen noch Leitungsverluste und Verluste im Wärmetauscher ausgeglichen.

Bei einer besonderen Ausführungsform kann die Brennereinrichtung mindestens eine Brennstoffzelle aufweisen, der eingangsseitig das mit Sauerstoff angereicherte CO₂-Medium sowie Kraftstoff zugeführt wird, wobei in der Brennstoffzelle eine Reaktion abläuft, die dem CO₂-Medium Sauerstoff entzieht, das CO₂-Medium erwärmt und elektrischen Strom erzeugt. Derartige Brennstoffzellen sind an sich bekannt und müssen daher nicht näher erläutert werden. Durch die Integration einer oder mehrerer Brennstoffzellen in die Brennereinheit kann der Gesamtwirkungsgrad der Kraftwerksanlage erhöht werden. Von besonderem Vorteil ist es dabei, wenn die Brennstoffzelle bezüglich der Versorgung des Brenners mit CO₂-Medium und Kraftstoff stromauf des Brenners angeordnet ist, da dadurch die Prozesstemperatur im Brenner und somit auch die Temperatur der im Brenner erzeugten Abgase (CO₂-Medium) erhöht werden. Eine höhere Temperatur im CO₂-Prozess hat eine Erhöhung des Wirkungsgrades der Kraftwerksanlage zur Folge.

Sofern das mit Sauerstoff angereicherte CO₂-Medium in einem Wärmetauscher gekühlt wird, ist es zweckmäßig, den für den Zusatzbrenner benötigten Teil des CO₂-Mediums stromab dieses Wärmetauschers abzuzweigen, da dann dem Wärmetauscher ein größerer Volumenstrom zur Verfügung steht und sich dessen Wirkungsgrad erhöht.

Das der Erfindung zugrundeliegende Problem wird auch durch eine Kraftwerksanlage mit den Merkmalen des Anspruchs 7 gelöst. Die Erfindung beruht auch hier auf dem allgemeinen Gedanken, mit Hilfe eines Zusatzbrenners die Vorlauftemperatur des mit Sauerstoff anzureichernden CO₂-Mediums vor dem Eintritt in die Sauerstofftrenneinrichtung zu erhöhen. Ein solcher Zusatzbrenner kann besonders einfach bedarfsabhängig gesteuert bzw. geregelt werden, wodurch das Einstellen und Aufrechterhalten einer optimalen Betriebstemperatur für die Sauerstofftrenneinrichtung gewährleistet werden kann. Dies ist von besonderem Vorteil für Sauerstofftrenneinrichtungen, die mit einer MCM-Membran arbeiten.

Weitere wichtige Merkmale und Vorteile der Erfindung ergeben sich aus den Unteransprüchen, aus den Zeichnungen und aus dazugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert. Es zeigen, jeweils schematisch
- Fig. 1: eine schaltplanartige Prinzipdarstellung einer erfindungsgemäßen Kraftwerksanlage bei einer ersten Ausführungsform und
- Fig. 2: eine Darstellung wie in Fig. 1, jedoch bei einer zweiten Ausführungsform.

### Wege zur Ausführung der Erfindung

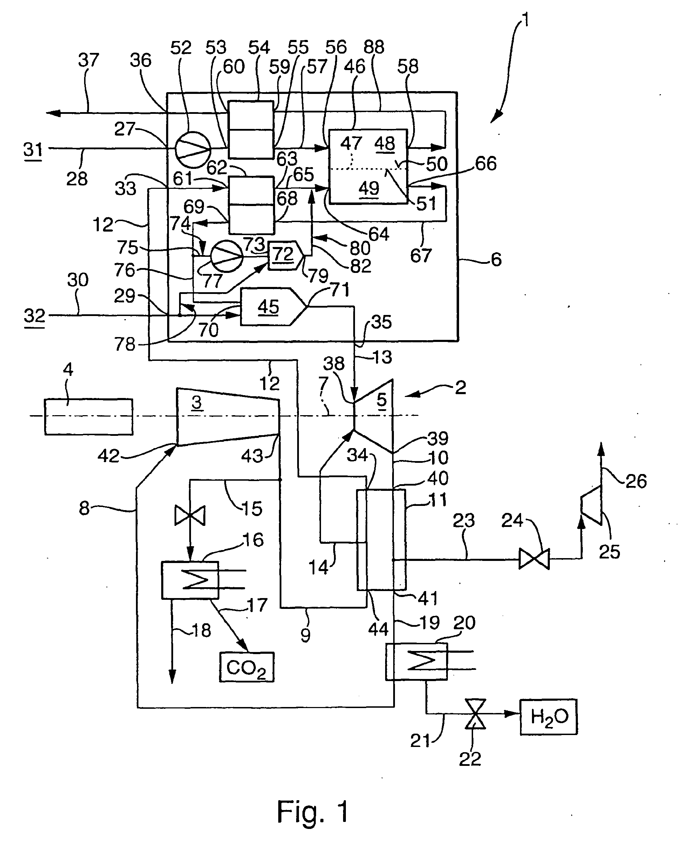

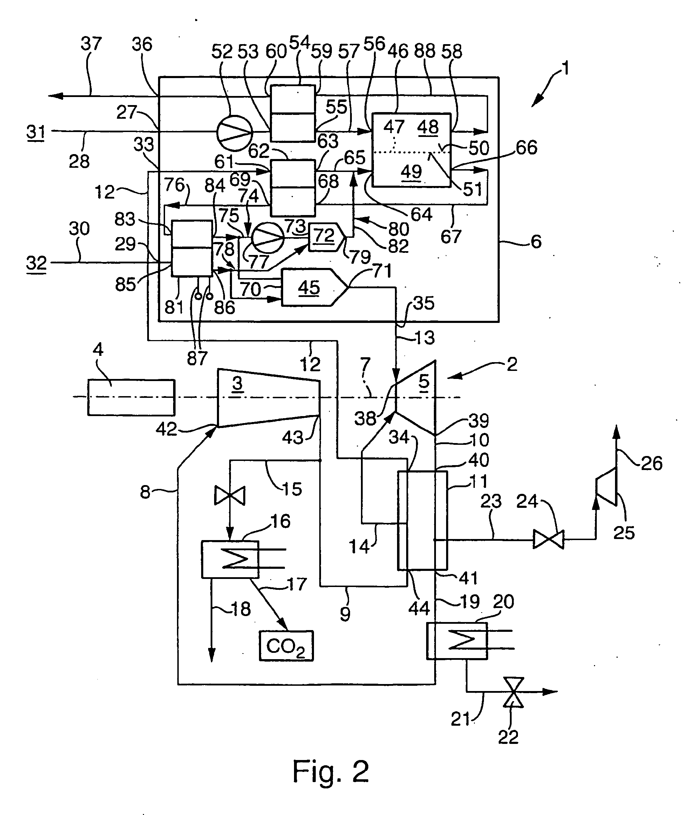

Entsprechend den Fig. 1 und 2 weist eine Kraftwerksanlage 1 nach der Erfindung eine Gasturbine bzw. eine Gasturbogruppe 2 auf, die einen geschlossenen bzw. quasi geschlossenen CO₂-Kreislauf besitzt. Hinsichtlich ihrer Aggregate besteht diese Gasturbogruppe 2 aus einem Verdichter bzw. aus einer Verdichtereinheit 3, einem mit diesem Verdichter 3 gekoppelten Generator 4, einer mit dem Verdichter 3 gekoppelten Turbine 5, einer zwischen Verdichter 3 und Turbine 5 wirkenden Brennereinheit 6, die hier durch einen Rahmen symbolisiert ist. Die Kopplung der Strömungsmaschinen, also des Verdichters 3 und der Turbine 5, kann anhand einer gemeinsamen Welle 7 erfolgen, die hier nur strichpunktiert symbolisiert ist.

Das vom Verdichter 3 angesaugte Kreislaufmedium 8, das eingangsseitig des Verdichters 3 beispielsweise einen Druck von etwa 10 bar bei einer Temperatur von etwa 25°C aufweist, strömt nach erfolgter Kompression als komprimiertes, kaltes Kreislaufmedium 9 in Gegenstromrichtung durch einen von heißen, entspannten Abgasen 10, die beispielsweise eine Temperatur von etwa 800°C aufweisen, beaufschlagten Rekuperator oder Wärmetauscher 11 und anschließend als erwärmtes, komprimiertes Kreislaufmedium 12 in die Brennereinheit 6. In der Brennereinheit 6 findet die kalorische Aufbereitung des Kreislaufmediums zu Heißgas, also zu einem heißen, komprimierten Kreislaufmedium 13 statt, mit dem die Turbine 5 beaufschlagt wird.

Zur Kühlung der thermisch hoch belasteten Aggregate der Gasturbogruppe 2, insbesondere der Turbine 5, kann eine Teilmenge 14 des verdichteten Kreislaufmediums 9 an geeigneter Stelle, zum Beispiel im Rekuperator 11 abgezweigt und zur Kühlung der genannten Aggregate, sei es in geschlossenen und/oder offenen Strömungspfaden, eingesetzt werden. Vorliegend ist hier lediglich die Kühlung der Turbine 5 angedeutet.

Das Kreislaufmedium besteht überwiegend aus CO₂, so dass das Kreislaufmedium im folgenden als CO₂-Medium bezeichnet wird. Dieses CO₂-Medium kann neben CO₂ außerdem noch parasitäre Gase enthalten, die zum Beispiel mit dem Sauerstoff und Brennstoff sowie beim Anfahren mit Luft eingeschleppt worden sind. Außerdem kann das CO₂-Medium Umwandlungsprodukte der parasitären Gase enthalten, zum Beispiel NOₓ.

Nach erfolgter Aufladung des CO₂-Kreises wird der aus der Verbrennung sich bildende Überschuss an CO₂ fortlaufend abgeführt, indem intermittierend oder fortlaufend ein Teil des CO₂-Mediums an geeigneter Stelle abgezweigt und kondensiert wird. In der hier dargestellten Ausführungsform geschieht diese CO₂-Entnahme dadurch, dass eine bestimmte Menge 15 des verdichteten kalten CO₂-Mediums 9 stromab des Verdichters 3 abgezweigt und durch einen Kühler 16 geleitet wird, in dem vorzugsweise eine Verflüssigung des CO₂-Gases stattfindet. Nach erfolgter Kondensation wird ein verflüssigter CO₂-Massenstrom 17 zur Entsorgung oder zu einer geeigneten Weiterverarbeitung abgeführt. Durch die Verflüssigung des CO₂-Gases des abgezweigten CO₂-Mediums 15 werden außerdem die parasitären Gase am Kühler 16 ausgeschieden, wobei ein in der Regel sehr kleiner Massenstrom 18 einer weiteren Separation unterworfen werden kann oder-je nach Art der Inhaltsstoffe - an die Atmosphäre abgegeben wird.

Stromab des Rekuperators 11 wird das dort austretende, vorgekühlte und entspannte CO₂-Medium 19, das beispielsweise noch eine Temperatur von etwa 200° bis 250°C aufweist, durch eine Wärmesenke 20 geleitet, in der eine Wassermenge ausgeschieden wird. Das hier anfallende Wasser 21 kann über ein Regelorgan 22 abgeleitet werden. Diese Wärmesenke wird vorzugsweise auf Umgebungstemperatur betrieben.

Die in den Figuren wiedergegebene beispielhafte Ausführungsform zeigt außerdem eine zusätzliche Entnahmemöglichkeit, mit der eine weitere Menge 23 des entspannten CO₂-Mediums 10 an geeigneter Stelle aus dem Rekuperator 11 zur geregelten Beaufschlagung 24 eines Expanders 25 entnehmbar ist. Das abgeführte, entspannte CO₂-Medium 26 kann beispielsweise wieder in den CO₂-Prozess zurückgeführt werden; ebenso ist eine Kondensation des entnommenen CO₂-Mediums 26 möglich. Ein solcher Expander 25 kann beispielsweise zur Aufladung des CO₂-Kreises verwendet werden.

Die Brennereinheit 6 weist einen ersten Eingang 27 auf, der mit einer Zuführung 31 für sauerstoffhaltiges Gas 28, z.B. Luft, verbunden ist. Diese Zuführung 31 saugt beispielsweise atmosphärische Luft 28 aus der Umgebung an. Desweiteren besitzt die Brennereinheit 6 einen zweiten Eingang 29, der mit einer Zuführung 32 für Kraftstoff 30 oder ein Kraftstoff-Dampf-Gemisch verbunden ist. Außerdem verfügt die Brennereinheit 6 über einen dritten Eingang 33, der mit einem ersten Ausgang 34 des Rekuperators 11 verbunden ist und von diesem mit erwärmtem, komprimiertem CO₂-Medium 12 versorgt wird. Schließlich besitzt die Brennereinheit 6 einen ersten Ausgang 35, aus dem das heiße, komprimierte CO₂-Medium 13 aus der Brennereinheit 6 austritt, sowie einen zweiten Ausgang 36, aus dem ein bezüglich seines Sauerstoffgehalts reduziertes Gas 37 aus der Brennereinheit 6 austritt.

Der erste Ausgang 35 der Brennereinheit 6 ist mit einem Eingang 38 der Turbine 5 verbunden, durch den das heiße, komprimierte CO₂-Medium 13 in die Turbine 5 eintritt. Ein Ausgang 39 der Turbine 5 ist mit einem zweiten Eingang 40 des Rekuperators 11 verbunden, durch den das entspannte, heiße CO₂-Medium 10 in den Rekuperator 11 eintritt. Ein mit dem zweiten Eingang 40 kommunizierender zweiter Ausgang 41 des Rekuperators 11 ist mit einem Eingang 42 des Verdichters 3 verbunden, durch den das kalte, entspannte CO₂-Medium 8 in den Verdichter 3 eintritt. Ein Ausgang 43 des Verdichters 3 ist dann mit einem ersten Eingang 44 des Rekuperators 11 verbunden, der mit dem ersten Ausgang 34 des Rekuperators 11 kommuniziert und durch den das verdichtete, kalte CO₂-Medium 9 in den Rekuperator 11 eintritt.

Die Brennereinheit 6 enthält zumindest einen Brenner 45 sowie eine Sauerstofftrenneinrichtung 46. Diese Sauerstofftrenneinrichtung 46 enthält Sauerstofftrennmittel, die hier als MCM-Membran 47 ausgebildet sind und in der Sauerstofftrenneinrichtung 46 eine erste Kammer 48 von einer zweiten Kammer 49 trennen. Die hier durch eine punktierte Linie dargestellte Membran 47 besitzt eine der ersten Kammer 48 ausgesetzte Rückhalteseite 50 sowie eine der zweiten Kammer 49 ausgesetzte Durchgangsseite 51. Die Membran 47 ist so ausgebildet, daß sie Sauerstoff von der ersten Kammer 48 in die zweite Kammer 49 transportiert.

Der erste Eingang 27 der Brennereinheit 6 ist an die Saugseite eines Gebläses 52 angeschlossen, das mit seiner Druckseite an einen ersten Eingang 53 eines ersten Wärmetauschers 54 angeschlossen ist. Ein mit dem ersten Eingang 53 kommunizierender erster Ausgang 55 des ersten Wärmetauschers 54 ist mit einem ersten Eingang 56 der Sauerstofftrenneinrichtung 46 verbunden, wobei das kalte, sauerstoffhaltige Gas 28 im ersten Wärmetauscher 54 erwärmt wird, so daß erwärmtes, sauerstoffhaltiges Gas 57 der ersten Kammer 48 auf die Rückhalteseite 50 der Membran 47 zugeführt wird. Aus einem mit dem ersten Eingang 56 kommunizierenden ersten Ausgang 58 der Sauerstofftrenneinrichtung 46 tritt dann ein bezüglich seines Sauerstoffgehalts reduziertes heißes Gas 88 aus. Der erste Ausgang 58 der Sauerstofftrenneinrichtung 46 ist mit einem zweiten Eingang 59 des ersten Wärmetauschers 54 verbunden, wobei dieser nach dem Gegenstromprinzip durchströmt wird. Ein mit dem zweiten Eingang 59 kommunizierender zweiter Ausgang 60 des ersten Wärmetauschers 54 ist mit dem zweiten Ausgang 36 der Brennereinheit 6 verbunden, so daß im ersten Wärmetauscher 54 gekühltes, sauerstoffarmes Gas 37 aus dem ersten Wärmetauscher 54 bzw. aus der Brennereinheit 6 austritt.

Der dritte Eingang 33 der Brennereinheit 6 ist mit einem zweiten Eingang 61 eines zweiten Wärmetauschers 62 verbunden, in dem eine weitere Erwärmung des bereits im Rekuperator 11 erwärmten, komprimierten CO₂-Mediums 12 erfolgt. Ein mit dem zweiten Eingang 61 kommunizierender zweiter Ausgang 63 des zweiten Wärmetauschers 62 ist mit einem zweiten Eingang 64 der Sauerstofftrenneinrichtung 46 verbunden, so daß vom zweiten Wärmetauscher 62 erwärmtes, komprimiertes CO₂-Medium 65 in die zweite Kammer 49 und somit an der Durchgangsseite 51 der Membran 47 eintritt. In der Sauerstofftrenneinrichtung 46 erfolgt nun eine Anreicherung des zugeführten CO₂-Mediums mit Sauerstoff. Dementsprechend tritt an einem mit dem zweiten Eingang 64 kommunizierenden zweiten Ausgang 66 der Sauerstofftrenneinrichtung 46 ein heißes, mit Sauerstoff angereichertes, komprimiertes CO₂-Medium 67 aus der Sauerstofftrenneinrichtung 46 aus. Der zweite Ausgang 66 der Sauerstofftrenneinrichtung 46 ist mit einem ersten Eingang 68 des zweiten Wärmetauschers 62 verbunden, so daß das heiße, komprimierte, mit Sauerstoff angereicherte CO₂-Medium 67 zur Erwärmung des dem zweiten Wärmetauscher 62 zugeführten, komprimierten CO₂-Mediums 12 dient. Ein mit dem ersten Eingang 68 kommunizierender erster Ausgang 69 des zweiten Wärmetauschers 62 ist mit einem Eingang 70 des Brenners 45 verbunden. Der Eingang 70 des Brenners 45 ist außerdem mit dem zweiten Eingang 29 der Brennereinheit 6 und somit mit der Kraftstoffzuführung 32 verbunden. Im Brenner 45 verbrennt der zugeführte Kraftstoff 30 mit dem Sauerstoff des zugeführten CO₂-Mediums 76, wobei sich weiteres CO₂ und H₂O bildet. Ein Ausgang 71 des Brenners 45 ist mit dem ersten Ausgang 35 der Brennereinheit 6 verbunden, so daß das im Brenner 45 erzeugte komprimierte, heiße CO₂-Medium 13 bei 35 aus der Brennereinheit 6 austritt.

Erfindungsgemäß besitzt die Brennereinheit 6 außerdem einen Zusatzbrenner 72, dessen Eingang 73 über eine Abzweigungsleitung 74 mit einem Teilstrom 75 des mit Sauerstoff angereicherten CO₂-Mediums 76 versorgt wird, das aus dem zweiten Wärmetauscher 62 austritt. Zu diesem Zweck ist die Abzweigungsleitung 74 stromab des zweiten Wärmetauschers 62 an die Verbindung zwischen erstem Ausgang 69 des zweiten Wärmetauschers 62 und dem Eingang 70 des Brenners 45 angeschlossen. Die Abzweigungsleitung 74 enthält hier ein Gebläse 77, das den Teilstrom 75 antreibt. Über eine Kraftstoffleitung 78 erhält der Eingang 73 des Zusatzbrenners 72 den erforderlichen Kraftstoff. Ein Ausgang 79 des Zusatzbrenners ist über eine Rückführungsleitung 80 an die Verbindung zwischen dem zweiten Ausgang 63 des zweiten Wärmetauschers 62 und dem zweiten Eingang 64 der Sauerstofftrenneinrichtung 46 angeschlossen. Somit wird im Zusatzbrenner 72 erzeugtes heißes CO₂-Medium 82 stromauf des zweiten Eingangs 64 der Sauerstofftrenneinrichtung 46 oder in diesem zweiten Eingang 64 mit dem mit Sauerstoff anzureichernden erwärmten, komprimierten CO₂-Medium 65 vermischt, wodurch sich die Temperatur des mit Sauerstoff anzureichernden CO₂-Mediums 65 erhöht. Dementsprechend kann die Betriebstemperatur der Sauerstofftrenneinrichtung 46 erhöht werden.

Bei der Variante gemäß Fig. 2 ist dem Brenner 45 eine Brennstoffzelle 81 bzw. eine Brennstoffzellenanordnung vorgeschaltet und zwar sowohl bezüglich der Versorgung mit sauerstoffhaltigem CO₂-Medium 76 als auch bezüglich der Versorgung mit Kraftstoff 30. Dementsprechend ist ein erster Eingang 83 der Brennstoffzelle 81 mit dem ersten Ausgang 69 des zweiten Wärmetauschers 62 verbunden. Ein mit dem ersten Eingang 83 kommunizierender erster Ausgang 84 der Brennstoffzelle 81 ist mit dem Eingang 70 des Brenners 45 verbunden. Bei der hier dargestellten Ausführungsform zweigt die Abzweigungsleitung 74 des Zusatzbrenners 72 stromab der Brennstoffzelle 81 von der Verbindung zwischen der Brennstoffzelle 81 und dem Brenner 45 ab. Ein zweiter Eingang 85 der Brennstoffzelle 81 ist mit dem zweiten Eingang 29 der Brennereinheit 6 verbunden und erhält dadurch von der Kraftstoffzuführung 32 den erforderlichen Kraftstoff 30. Ein mit dem zweiten Eingang 85 kommunizierender zweiter Ausgang 86 ist mit dem Eingang 70 des Brenners 45 verbunden. Die Kraftstoffleitung 78 des Zusatzbrenners 72 zweigt hier stromab der Brennstoffzelle 81 von der Verbindung zwischen Brennstoffzelle 81 und Brenner 45 ab.

In der Brennstoffzelle 81 reagiert der Sauerstoff des zugeführten CO₂-Mediums 76 mit dem zugeführten Kraftstoff 30, wobei der Sauerstoffgehalt des CO₂-Mediums reduziert, das CO₂-Medium erwärmt und elektrische Energie erzeugt wird. Die von der Brennstoffzelle 81 erzeugte elektrische Energie kann beispielsweise bei 87 abgegriffen werden. Die Brennstoffzelle 81 bzw. die Brennstoffzellengruppe ist hierbei so dimensioniert, daß nur ein Teil des Sauerstoffs des zugeführten CO₂-Mediums 76 sowie nur ein Teil des zugeführten Kraftstoffs 30 verbraucht werden. Dadurch wird erreicht, daß die danach ablaufende Verbrennungsreaktion im Brenner 45 auf einem erhöhten Temperaturniveau stattfindet, so daß die Temperatur des letztlich aus dem Brenner 45 austretenden CO₂-Mediums 13 gegenüber der Ausführungsform gemäß Fig. 1 erhöht sein kann. Durch die höhere Prozeßtemperatur ergibt sich ein erhöhter Wirkungsgrad für die Gasturbogruppe 2.

### Bezugszeichenliste

- 1: Kraftwerksanlage
- 2: Gasturbogruppe
- 3: Verdichter
- 4: Generator
- 5: Turbine
- 6: Brennereinheit
- 7: Welle
- 8: kaltes, entspanntes CO₂-Medium
- 9: kaltes, komprimiertes CO₂-Medium
- 10: heißes, entspanntes CO₂-Medium
- 11: Rekuperator
- 12: erwärmtes, komprimiertes CO₂-Medium
- 13: heißes, komprimiertes CO₂-Medium
- 14: Teilmenge
- 15: CO₂-Medium
- 16: Kühler
- 17: flüssiges CO₂
- 18: Massenstrom
- 19: vorgekühltes, entspanntes CO₂-Medium
- 20: Wärmesenke
- 21: Wasser
- 22: Regelorgan
- 23: Entnahmemenge
- 24: Beaufschlagung
- 25: Expander
- 26: entnommenes, entspanntes CO₂-Medium
- 27: erster Eingang von 6
- 28: sauerstoffhaltiges Gas/Luft
- 29: zweiter Eingang von 6
- 30: Kraftstoff
- 31: Zuführung für sauerstoffhaltiges Gas
- 32: Zuführung für Kraftstoff
- 33: dritter Eingang von 6
- 34: erster Ausgang von 11
- 35: erster Ausgang von 6
- 36: zweiter Ausgang von 6
- 37: sauerstoffreduziertes Gas
- 38: Eingang von 5
- 39: Ausgang von 5
- 40: zweiter Eingang von 11
- 41: zweiter Ausgang von 11
- 42: Eingang von 3
- 43: Ausgang von 3
- 44: erster Eingang von 11
- 45: Brenner
- 46: Sauerstofftrenneinrichtung
- 47: Sauerstofftrennmittel, MCM-Membran
- 48: erste Kammer von 46
- 49: zweite Kammer von 46
- 50: Rückhalteseite von 47
- 51: Durchgangsseite von 47
- 52: Gebläse
- 53: erster Eingang von 54
- 54: erster Wärmetauscher
- 55: erster Ausgang von 54
- 56: erster Eingang von 46
- 57: erwärmtes, sauerstoffhaltiges Gas
- 58: erster Ausgang von 46
- 59: zweiter Eingang von 54
- 60: zweiter Ausgang von 54
- 61: zweiter Eingang von 62
- 62: zweiter Wärmetauscher
- 63: zweiter Ausgang von 62
- 64: zweiter Eingang von 46
- 65: erwärmtes, komprimiertes CO₂-Medium
- 66: zweiter Ausgang von 64
- 67: heißes, komprimiertes, Sauerstoff angereichertes CO₂-Medium
- 68: erster Eingang von 62
- 69: erster Ausgang von 62
- 70: Eingang von 45
- 71: Ausgang von 45
- 72: Zusatzbrenner
- 73: Eingang von 72
- 74: Abzweigungsleitung
- 75: Teilstrom
- 76: mit Sauerstoff angereichertes CO₂-Medium
- 77: Gebläse
- 78: Kraftstoffleitung
- 79: Ausgang von 72
- 80: Rückführungsleitung
- 81: Brennstoffzelle
- 82: heißes CO₂-Medium
- 83: erster Eingang von 81
- 84: erster Ausgang von 81
- 85: zweiter Eingang von 81
- 86: zweiter Ausgang von 81
- 87: Abgriff
- 88: sauerstoffreduziertes Gas

## Patentansprüche

1. Verfahren zum Betrieb einer Kraftwerksanlage mit einem geschlossenen oder quasi geschlossenen CO₂-Prozess,
wobei die Kraftwerksanlage (1) im wesentlichen mindestens einen Verdichter (3), mindestens eine Turbine (5), mindestens einen Generator (4), mindestens einen Rekuperator (11) und mindestens eine Brennereinheit (6) mit mindestens einer Sauerstofftrenneinrichtung (46) und mit mindestens einem Brenner (45) aufweist, wobei der Brennereinheit (6) sauerstoffhaltiges Gas (28), komprimiertes, erwärmtes CO₂-Medium (12) des CO₂-Prozesses und Kraftstoff (30) oder ein Kraftstoff-Dampf-Gemisch zugeführt wird,
wobei die Sauerstofftrenneinrichtung (46) dem sauerstoffhaltigen Gas (28, 57) Sauerstoff entnimmt und dem CO₂-Medium (12, 65) zuführt, wobei im Brenner (45) eine Verbrennung des mit Sauerstoff angereicherten CO₂-Mediums (67, 76) mit dem Kraftstoff (30) stattfindet,
wobei heißes, komprimiertes CO₂-Medium (13) aus der Brennereinheit (6) austritt und in der Turbine (5) entspannt wird,
wobei das entspannte, heiße CO₂-Medium (10) im Rekuperator (11) gekühlt wird, wobei das gekühlte, entspannte CO₂-Medium (8) im Verdichter (3) komprimiert wird,
wobei das komprimierte, gekühlte CO₂-Medium (9) im Rekuperator (11) erwärmt wird,
**dadurch gekennzeichnet, daß** die Brennereinheit (6) einen Zusatzbrenner (72) aufweist, dem ein Teil (75) des mit Sauerstoff angereicherten CO₂-Mediums (67, 76) sowie Kraftstoff (30) oder Kraftstoff-Dampf-Gemisch zugeführt wird, wobei durch die im Zusatzbrenner (72) stattfindende Verbrennung gebildetes heißes CO₂-Medium (82) dem erwärmten CO₂-Medium (12, 65) am Eingang (64) der Sauerstofftrenneinrichtung (46) oder stromauf dieses Eingangs (64) zugemischt wird.

2. Verfahren nach Anspruch 1, **dadurch gekennzeichnet, daß** die Brennereinheit (6) einen Wärmetauscher (62) aufweist, der einerseits vom CO₂-Medium (12, 65) stromauf der Sauerstofftrenneinrichtung (46) und andererseits vom CO₂-Medium (67, 76) stromab der Sauerstofftrenneinrichtung (46) durchströmt wird, wobei durch die Verbrennung im Zusatzbrenner (72) gebildetes heißes CO₂-Medium (82) dem im Wärmetauscher (62) erwärmten CO₂-Medium (65) stromab des Wärmetauschers (62) zugemischt wird.

3. Verfahren nach Anspruch 2, **dadurch gekennzeichnet, daß** der Wärmetauscher (62) bezüglich der Versorgung des Zusatzbrenners (72) mit CO₂-Medium (75, 76) stromauf des Zusatzbrenners (72) angeordnet ist.

4. Verfahren nach einem der Ansprüche 1 bis 3, **dadurch gekennzeichnet, daß** die Brennereinrichtung (6) mindestens eine Brennstoffzelle (81) aufweist, der eingangsseitig das mit Sauerstoff angereicherte CO₂-Medium (67, 76) und Kraftstoff (30) oder Kraftstoff-Dampf-Gemisch zugeführt wird, wobei in der Brennstoffzelle (81) eine Reaktion abläuft, die dem CO₂-Medium (67, 76) Sauerstoff entzieht, das CO₂-Medium erwärmt und elektrischen Strom erzeugt.

5. Verfahren nach Anspruch 4, **dadurch gekennzeichnet, daß** die Brennstoffzelle (81) bezüglich der Versorgung des Brenners (45) und/oder des Zusatzbrenners (72) mit Kraftstoff (30) und/oder mit CO₂-Medium (76) stromauf des Brenners (45) und/oder des Zusatzbrenners (72) angeordnet ist.

6. Verfahren nach Anspruch 4, **dadurch gekennzeichnet, daß** die Brennstoffzelle (81) bezüglich der Versorgung des Zusatzbrenners (72) mit CO₂-Medium (75, 76) stromab des Wärmetauschers (62) angeordnet ist.

7. Kraftwerksanlage mit einem CO₂-Prozeß, umfassend mindestens einen Verdichter (3), mindestens eine Turbine (5), mindestens einen Generator (4), mindestens einen Rekuperator (11) und mindestens eine Brennereinheit (6) mit mindestens einem Brenner (45) und mit mindestens einer Sauerstofftrenneinrichtung (46), sowie mit folgenden Merkmalen:
- ein erster Eingang (27) der Brennereinrichtung (6) ist mit einer Zuführung (31) für sauerstoffhaltiges Gas (28) verbunden,
- ein zweiter Eingang (29) der Brennereinheit (6) ist mit einer Zuführung (32) für Kraftstoff (30) oder Kraftstoff-Dampf-Gemisch verbunden,
- ein dritter Eingang (33) der Brennereinheit (6) ist mit einem ersten Ausgang (34) des Rekuperators (11) verbunden, aus dem erwärmtes, komprimiertes CO₂-Medium (12) des CO₂-Prozeßes austritt,
- ein mit dem ersten Ausgang (34) des Rekuperators (11) kommunizierender erster Eingang (44) des Rekuperators (11) ist mit einem Ausgang (43) des Verdichters (3) verbunden, aus dem kaltes, komprimiertes CO₂-Medium (9) austritt,
- ein Eingang (42) des Verdichters (3) ist mit einem zweiten Ausgang (41) des Rekuperators (11) verbunden, aus dem gekühltes, entspanntes CO₂-Medium (8, 19) austritt,
- ein mit dem zweiten Ausgang (41) des Rekuperators (11) kommunizierender zweiter Eingang (40) des Rekuperators (11) ist mit einem Ausgang (39) der Turbine (5) verbunden, aus dem heißes, entspanntes CO₂-Medium (10) austritt,
- ein Eingang (38) der Turbine (5) ist mit einem ersten Ausgang (35) der Brennereinheit (6) verbunden, aus dem heißes, komprimiertes CO₂-Medium (13) austritt,
- ein erster Eingang (56) der Sauerstofftrenneinrichtung (46) ist mit dem ersten Eingang (27) der Brennereinrichtung (6) verbunden,
- ein mit dem ersten Eingang (56) der Sauerstofftrenneinrichtung (46) kommunizierender erster Ausgang (58) der Sauerstofftrenneinrichtung (46) ist mit einem zweiten Ausgang (36) der Brennereinheit (6) verbunden, aus dem bezüglich seines Sauerstoffgehalts reduziertes Gas (37) austritt,
- ein zweiter Eingang (64) der Sauerstofftrenneinrichtung (46) ist mit dem dritten Eingang (33) der Brennereinheit (6) verbunden,
- die Sauerstofftrenneinheit (46) enthält Sauerstofftrennmittel (47), die dem sauerstoffhaltigen Gas (28, 57) Sauerstoff entnehmen und dem CO₂-Medium (12, 65) zuführen,
- ein mit dem zweiten Eingang (64) der Sauerstofftrenneinrichtung (46) kommunizierender zweiter Ausgang (66) der Sauerstofftrenneinrichtung (46) ist mit einem Eingang (70) des Brenners (45) verbunden und führt diesem mit Sauerstoff angereichertes CO₂-Medium (67, 76) zu,
- der Eingang (70) des Brenners (45) ist außerdem mit dem zweiten Eingang (29) der Brennereinheit (6) verbunden,
- ein Ausgang (71) des Brenners (45) ist mit dem ersten Ausgang (35) der Brennereinheit (6) verbunden und führt diesem heißes, komprimiertes CO₂-Medium (13) zu, das durch die Verbrennung im Brenner (45) entsteht,
**gekennzeichnet durch** folgende Merkmale:
- die Brennereinheit (6) weist einen Zusatzbrenner (72) auf,
- von der Verbindung zwischen dem zweiten Ausgang (66) der Sauerstofftrenneinrichtung (46) und dem Eingang (70) des Brenners (45) zweigt eine Abzweigungsleitung (74) ab, die einem Eingang (73) des Zusatzbrenners (72) einen Teil (75) des mit Sauerstoff angereicherten CO₂-Mediums (67, 76) zuführt,
- der Eingang (73) des Zusatzbrenners (72) ist außerdem mit dem zweiten Eingang (29) der Brennereinheit (6) verbunden,
- ein Ausgang (79) des Zusatzbrenners (72) ist über eine Rückführungsleitung (80) mit dem zweiten Eingang (64) der Sauerstofftrenneinrichtung (46) verbunden.

8. Kraftwerksanlage nach Anspruch 7, **dadurch gekennzeichnet, daß** die Brennereinheit (6) einen Wärmetauscher (62) aufweist,
wobei ein erster Eingang (68) des Wärmetauschers (62) mit dem zweiten Ausgang (66) der Sauerstofftrenneinrichtung (46) verbunden ist,
wobei ein mit dem ersten Eingang (68) des Wärmetauschers (62) kommunizierender erster Ausgang (69) des Wärmetauschers (62) mit dem Brenner (45) verbunden ist,
wobei ein zweiter Eingang (61) des Wärmetauschers (62) mit dem dritten Eingang (33) der Brennereinheit (6) verbunden ist,
wobei ein mit dem zweiten Eingang (61) des Wärmetauschers (62) kommunizierender zweiter Ausgang (63) des Wärmetauschers (62) mit dem zweiten Eingang (64) der Sauerstofftrenneinrichtung (46) verbunden ist,
wobei die Rückführungsleitung (80) in die Verbindung zwischen dem zweiten Ausgang (63) des Wärmetauschers (62) und dem zweiten Eingang (64) der Sauerstofftrenneinrichtung (46) einmündet.

9. Kraftwerksanlage nach Anspruch 8, **dadurch gekennzeichnet, daß** die Abzweigungsleitung (74) von der Verbindung zwischen dem ersten Ausgang (69) des Wärmetauschers (62) und dem Eingang (70) des Brenners (45) abzweigt.

10. Kraftwerksanlage nach einem der Ansprüche 7 bis 9, **dadurch gekennzeichnet, daß** die Brennereinheit (6) mindestens eine Brennstoffzelle (81) aufweist,
wobei ein erster Eingang (83) der Brennstoffzelle (81) mit dem zweiten Ausgang (66) der Sauerstofftrenneinrichtung (46) verbunden ist,
wobei ein mit dem ersten Eingang (83) kommunizierender erster Ausgang (84) der Brennstoffzelle (81) mit dem Eingang (70) des Brenners (45) verbunden ist, wobei ein zweiter Eingang (85) der Brennstoffzelle (81) mit dem zweiten Eingang (29) der Brennereinheit (6) verbunden ist,
wobei ein mit dem zweiten Eingang (85) der Brennstoffzelle (81) kommunizierender zweiter Ausgang (86) der Brennstoffzelle (81) mit dem Eingang (70) des Brenners (45) verbunden ist.

11. Kraftwerksanlage nach Anspruch 10, **dadurch gekennzeichnet, daß** eine mit dem Eingang (73) des Zusatzbrenners (72) verbundene Kraftstoffleitung (78) von der Verbindung zwischen dem zweiten Ausgang (86) der Brennstoffzelle (81) und dem Eingang (70) des Brenners (45) abzweigt.

12. Kraftwerksanlage nach Anspruch 10 oder 11, **dadurch gekennzeichnet, daß** die mit dem Eingang (73) des Zusatzbrenners (72) verbundene Abzweigungsleitung (74) von der Verbindung zwischen dem ersten Ausgang (84) der Brennstoffzelle (81) und dem Eingang (70) des Brenners (45) abzweigt.

13. Kraftwerksanlage zumindest nach Anspruch 10, **dadurch gekennzeichnet, daß** der erste Eingang (83) der Brennstoffzelle (81) mit dem ersten Ausgang (69) des Wärmetauschers (62) verbunden ist.

14. Kraftwerksanlage zumindest nach Anspruch 10, **dadurch gekennzeichnet, daß** die Brennstoffzelle (81) als Hochtemperatur-Brennstoffzelle ausgebildet ist.

## Claims

1. Method for operating a power plant with a closed or virtually closed CO₂ process, wherein the power plant (1) essentially comprises at least one compressor (3), at least one turbine (5), at least one generator (4), at least one recuperator (11) and at least one burner unit (6) with at least one oxygen separation device (46) and with at least one burner (45),
wherein oxygenous gas (28), compressed, heated CO₂ medium (12) of the CO₂ process and fuel (30), or a fuel-steam mixture, are fed to the burner unit (6),
wherein the oxygen separation device (46) extracts oxygen from the oxygenous gas (28, 57) and adds it to the CO₂ medium (12, 65), wherein in the burner (45) combustion of the oxygen-enriched CO₂ medium (67, 76) with the fuel (30) takes place,
wherein hot, compressed CO₂ medium (13) discharges from the burner unit (6) and is expanded in the turbine (5),
wherein the expanded, hot CO₂ medium (10) is cooled in the recuperator (11),
wherein the cooled, expanded CO₂ medium (8) is compressed in the compressor (3), wherein the compressed, cooled CO₂ medium (9) is heated in the recuperator (11), **characterized in that** the burner unit (6) comprises an additional burner (72) to which is fed some (75) of the oxygen-enriched CO₂ medium (67, 76) and also fuel (30) or fuel-steam mixture, wherein hot CO₂ medium (82) which is formed as a result of the combustion which takes place in the additional burner (72) is admixed with the heated CO₂ medium (12, 65) at the inlet (64) of the oxygen separation device (46) or upstream of this inlet (64).

2. Method according to Claim 1, **characterized in that** the burner unit (6) comprises a heat exchanger (62) which on one side is exposed to throughflow by CO₂ medium (12, 65) upstream of the oxygen separation device (46), and on the other side is exposed to throughflow by CO₂ medium (67, 76) downstream of the oxygen separation device (46), wherein hot CO₂ medium (82) which is formed as a result of the combustion in the additional burner (72) is admixed with the CO₂ medium (65) which is heated in the heat exchanger (62) downstream of the heat exchanger (62).

3. Method according to Claim 2, **characterized in that** the heat exchanger (62) is arranged upstream of the additional burner (72) with regard to the supply of the additional burner (72) with CO₂ medium (75, 76).

4. Method according to one of Claims 1 to 3, **characterized in that** the burner unit (6) has at least one fuel cell (81) to which on the inlet side the oxygen-enriched CO₂ medium (67, 76) and fuel (30) or fuel-steam mixture are fed, wherein in the fuel cell (81) a reaction occurs which extracts oxygen from the CO₂ medium (67, 76), heats the CO₂ medium, and generates electric power.

5. Method according to Claim 4, **characterized in that** the fuel cell (81) is arranged upstream of the burner (45) with regard to the supply of the burner (45) and/or of the additional burner (72) with fuel (30) and/or with CO₂ medium (76).

6. Method according to Claim 4, **characterized in that** the fuel cell (81) is arranged downstream of the heat exchanger (62) with regard to the supply of the additional burner (72) with CO₂ medium (75, 76).

7. Power plant with a CO₂ process, comprising at least one compressor (3), at least one turbine (5), at least one generator (4), at least one recuperator (11) and at least one burner unit (6) with at least one burner (45) and with at least one oxygen separation device (46), and also with the following features:
- a first inlet (27) of the burner unit (6) is connected to a feed line (31) for oxygenous gas (28),
- a second inlet (29) of the burner unit (6) is connected to a feed line (32) for fuel (30) or fuel-steam mixture,
- a third inlet (33) of the burner unit (6) is connected to a first outlet (34) of the recuperator (11), from which heated, compressed CO₂ medium (12) of the CO₂ process discharges,
- a first inlet (44) of the recuperator (11), which communicates with the first outlet (34) of the recuperator (11), is connected to an outlet (43) of the compressor (3), from which cold, compressed CO₂ medium (9) discharges,
- an inlet (42) of the compressor (3) is connected to a second outlet (41) of the recuperator (11), from which cooled, expanded CO₂ medium (8, 19) discharges,
- a second inlet (40) of the recuperator (11), which communicates with the second outlet (41) of the recuperator (11), is connected to an outlet (39) of the turbine (5), from which hot, expanded CO₂ medium (10) discharges,
- an inlet (38) of the turbine (5) is connected to a first outlet (35) of the burner unit (6), from which hot, compressed CO₂ medium (13) discharges,
- a first inlet (56) of the oxygen separation device (46) is connected to the first inlet (27) of the burner unit (6),
- a first outlet (58) of the oxygen separation device (46), which communicates with the first inlet (56) of the oxygen separation device (46), is connected to a second outlet (36) of the burner unit (6), from which gas (37), which is reduced with regard to its oxygen content, discharges,
- a second inlet (64) of the oxygen separation device (46) is connected to the third inlet (33) of the burner unit (6),
- the oxygen separation device (46) includes oxygen separation means (47) which extract oxygen from the oxygenous gas (28, 57) and adds it to the CO₂ medium (12, 65),
- a second outlet (66) of the oxygen separation device (46), which communicates with the second inlet (64) of the oxygen separation device (46), is connected to an inlet (70) of the burner (45) and to this feeds oxygen-enriched CO₂ medium (67, 76),
- the inlet (70) of the burner (45) is also connected to the second inlet (29) of the burner unit (6),
- an outlet (71) of the burner (45) is connected to the first outlet (35) of the burner unit (6) and to this feeds hot, compressed CO₂ medium (13) which ensues as a result of the combustion in the burner (45),
**characterized by** the following features:
- the burner unit (6) comprises an additional burner (72),
- a branch line (74), which feeds some (75) of the oxygen-enriched CO₂ medium (67, 76) to an inlet (73) of the additional burner (72), branches off from the connection between the second outlet (66) of the oxygen separation device (46) and the inlet (70) of the burner (45),
- the inlet (73) of the additional burner (72) is also connected to the second inlet (29) of the burner unit (6),
- an outlet (79) of the additional burner (72) is connected via a return line (80) to the second inlet (64) of the oxygen separation device (46).

8. Power plant according to Claim 7, **characterized in that** the burner unit (6) has a heat exchanger (62),
wherein a first inlet (68) of the heat exchanger (62) is connected to the second outlet (66) of the oxygen separation device (46),
wherein a first outlet (69) of the heat exchanger (62), which communicates with the first inlet (68) of the heat exchanger (62), is connected to the burner (45),
wherein a second inlet (61) of the heat exchanger (62) is connected to the third inlet (33) of the burner unit (6),
wherein a second outlet (63) of the heat exchanger (62), which communicates with the second inlet (61) of the heat exchanger (62), is connected to the second inlet (64) of the oxygen separation device (46),
wherein the return line (80) leads to the connection between the second outlet (63) of the heat exchanger (62) and the second inlet (64) of the oxygen separation device (46).

9. Power plant according to Claim 8, **characterized in that** the branch line (74) branches off from the connection between the first outlet (69) of the heat exchanger (62) and the inlet (70) of the burner (45).

10. Power plant according to one of Claims 7 to 9, **characterized in that** the burner unit (6) has at least one fuel cell (81),
wherein a first inlet (83) of the fuel cell (81) is connected to the second outlet (66) of the oxygen separation device (46),
wherein a first outlet (84) of the fuel cell (81), which communicates with the first inlet (83), is connected to the inlet (70) of the burner (45),
wherein a second inlet (85) of the fuel cell (81) is connected to the second inlet (29) of the burner unit (6),
wherein a second outlet (86) of the fuel cell (81), which communicates with the second inlet (85) of the fuel cell (81), is connected to the inlet (7) of the burner (45).

11. Power plant according to Claim 10, **characterized in that** a fuel line (78), which is connected to the inlet (73) of the additional burner (72), branches off from the connection between the second outlet (86) of the fuel cell (81) and the inlet (70) of the burner (45).

12. Power plant according to Claim 10 or 11, **characterized in that** the branch line (74), which is connected to the inlet (73) of the additional burner (72), branches off from the connection between the first outlet (84) of the fuel cell (81) and the inlet (70) of the burner (45).

13. Power plant at least according to Claim 10, **characterized in that** the first inlet (83) of the fuel cell (81) is connected to the first outlet (69) of the heat exchanger (62).

14. Power plant at least according to Claim 10, **characterized in that** the fuel cell (81) is formed as a high-temperature fuel cell.

## Revendications

1. Procédé de conduite d'une installation de production d'électricité avec un processus CO₂ fermé ou quasi fermé,
l'installation (1) de production d'électricité comprenant essentiellement au moins un compresseur (3), au moins une turbine (5), au moins un générateur (4), au moins un récupérateur (11) et au moins une unité de combustion (6) qui présente au moins un système (46) de séparation d'oxygène et au moins un brûleur (45),
un gaz (28) contenant de l'oxygène, un fluide de CO₂ comprimé et chauffé (12) provenant du processus CO₂ et un carburant (30) ou un mélange de carburant et de vapeur étant apportés à l'unité de combustion (6),
le système (46) de séparation d'oxygène prélevant de l'oxygène dans le gaz (28, 57) contenant de l'oxygène et l'apportant au fluide de CO₂ (12, 65), une combustion du fluide (67, 76) de CO₂ enrichi en oxygène ayant lieu avec le combustible (30) dans le brûleur (45),
le fluide de CO₂ chaud et comprimé (13) sortant de l'unité de combustion (6) et étant détendu dans la turbine (5),
le fluide de CO₂ chaud et détendu (10) étant refroidi dans le récupérateur (11),
le fluide de CO₂ détendu et refroidi (8) étant comprimé dans le compresseur (3),
le fluide de CO₂ comprimé et refroidi (9) étant chauffé dans le récupérateur (11),
**caractérisé en ce que**
l'unité de combustion (6) présente un brûleur supplémentaire (72) dans lequel une partie (75) du fluide (67, 76) de CO₂ enrichi en oxygène ainsi qu'un carburant (30) ou un mélange de carburant et de vapeur sont apportés, le fluide de CO₂ chaud (82) formé par la combustion qui a lieu dans le brûleur supplémentaire (72) étant mélangé au fluide de CO₂ chaud (12, 65) à l'entrée (64) du système (46) de séparation d'oxygène ou en amont de cette entrée (64).

2. Procédé selon la revendication 1, **caractérisé en ce que** l'unité de combustion (6) présente un échangeur de chaleur (62) qui est traversé d'une part par le fluide de CO₂ (12, 65) en amont du système (46) de séparation d'oxygène et d'autre part par le fluide de CO₂ (67, 76) en aval du système (46) de séparation d'oxygène, le fluide de CO₂ chaud (82) formé par la combustion dans le brûleur supplémentaire (72) étant mélangé avec le fluide de CO₂ (65) chauffé dans l'échangeur de chaleur (62) en aval de l'échangeur de chaleur (62).

3. Procédé selon la revendication 2, **caractérisé en ce que** l'échangeur de chaleur (62) est disposé en amont du brûleur supplémentaire (72) par rapport à l'alimentation du brûleur supplémentaire (72) en fluide de CO₂ (75, 76).

4. Procédé selon l'une des revendications 1 à 3, **caractérisé en ce que** le dispositif de combustion (6) présente au moins une pile à combustible (81) à l'entrée de laquelle sont apportés le fluide de CO₂ (67, 76) enrichi en oxygène et du carburant (30) ou un mélange de vapeur et de carburant, une réaction dans laquelle l'oxygène extrait du fluide de CO₂ (67, 76) chauffe le fluide de CO₂ et produit du courant électrique ayant lieu dans la pile à combustible (81).

5. Procédé selon la revendication 4, **caractérisé en ce que** la pile à combustible (81) est disposée en amont du brûleur (45) et/ou du brûleur supplémentaire (72) par rapport à l'alimentation du brûleur (45) et/ou du brûleur supplémentaire (72) en combustible (30) et/ou en fluide de CO₂ (76).

6. Procédé selon la revendication 4, **caractérisé en ce que** la pile à combustible (81) est disposée en aval de l'échangeur de chaleur (62) par rapport à l'alimentation du brûleur supplémentaire (72) en fluide de CO₂ (75, 76).

7. Installation de production d'électricité dotée d'un processus CO₂, comprenant au moins un compresseur (3), au moins une turbine (5), au moins un générateur (4), au moins un récupérateur (11) et au moins une unité de combustion (6) qui présente au moins un brûleur (45) et au moins un système (46) de séparation d'oxygène, et présentant les caractéristiques suivantes :
- une première entrée (27) du dispositif de combustion (6) est reliée à une amenée (31) de gaz (28) contenant de l'oxygène,
- une deuxième entrée (29) de l'unité de combustion (6) est reliée à une amenée (32) de carburant (30) ou d'un mélange de carburant et de vapeur,
- une troisième entrée (33) de l'unité de combustion (6) est reliée à la première sortie (34) du récupérateur (11) de laquelle sort un fluide de CO₂ chauffé et comprimé (12) provenant du processus CO₂,
- une première entrée (44) du récupérateur (11), qui communique avec la première sortie (34) du récupérateur (11), est reliée à une sortie (43) du compresseur (3) duquel sort un fluide de CO₂ comprimé et froid (9),
- une entrée (42) du compresseur (3) est reliée à une deuxième sortie (41) du récupérateur (11) de laquelle sort un fluide de CO₂ refroidi et détendu (8, 19),
- une deuxième entrée (40) du récupérateur (11), qui communique avec la deuxième sortie (41) du récupérateur (11), est reliée à une sortie (39) de la turbine (5) de laquelle sort le fluide de CO₂ chaud et détendu (10),
- une entrée (38) de la turbine (5) est reliée à une première sortie (35) de l'unité de combustion (6) de laquelle sort le fluide de CO₂ comprimé et chaud (13),
- une première entrée (56) du système (46) de séparation d'oxygène est reliée à la première entrée (27) du dispositif de combustion (6),
- une première sortie (58) du système (46) de séparation d'oxygène, qui communique avec la première entrée (56) du système (46) de séparation d'oxygène, est reliée à une deuxième sortie (36) de l'unité de combustion (6) de laquelle sort un gaz (37) dont la teneur en oxygène est réduite,
- une deuxième entrée (64) du système (46) de séparation d'oxygène est reliée à la troisième entrée (33) de l'unité de combustion (6),
- l'unité (46) de séparation d'oxygène contient des moyens (47) de séparation d'oxygène qui prélèvent de l'oxygène dans le gaz (28, 57) contenant de l'oxygène et l'amènent au fluide de CO₂ (12, 65),
- une deuxième sortie (66) du système (46) de séparation d'oxygène, qui communique avec la deuxième entrée (64) du système (46) de séparation d'oxygène, est reliée à une entrée (70) du brûleur (45) et amène à ce dernier un fluide de CO₂ (67, 76) enrichi en oxygène,
- l'entrée (70) du brûleur (45) est en outre reliée à la deuxième entrée (29) de l'unité de combustion (6),
- une sortie (71) du brûleur (45) est reliée à la première sortie (35) de l'unité de combustion (6) et amène à cette dernière le fluide de CO₂ chaud et comprimé (13) qui est produit par la combustion dans le brûleur (45),
**caractérisée par** les caractéristiques suivantes :
- l'unité de combustion (6) présente un brûleur supplémentaire (72),
- un conduit de dérivation (74) qui amène à une entrée (73) du brûleur supplémentaire (72) une partie (75) du fluide de CO₂ (67, 76) enrichi en oxygène dérive de la liaison entre la deuxième sortie (66) du système (46) de séparation d'oxygène et l'entrée (70) du brûleur (45),
- l'entrée (73) du brûleur supplémentaire (72) est en outre reliée à la deuxième entrée (29) de l'unité de combustion (6) et
- une sortie (79) du brûleur supplémentaire (72) est reliée par un conduit de renvoi (80) à la deuxième entrée (64) du système (46) de séparation d'oxygène.

8. Installation de production d'électricité selon la revendication 7, **caractérisée en ce que** l'unité de combustion (6) présente un échangeur de chaleur (62),
une première entrée (68) de l'échangeur de chaleur (62) étant reliée à la deuxième sortie (66) du système (46) de séparation d'oxygène,
- une première sortie (69) de l'échangeur (62), qui communique avec la première entrée (68) de l'échangeur (62), est reliée au brûleur (45),
- une deuxième entrée (61) de l'échangeur de chaleur (62) est reliée à la troisième entrée (33) de l'unité de combustion (6),
- une deuxième sortie (63) de l'échangeur de chaleur (62), qui communique avec la deuxième entrée (61) de l'échangeur de chaleur (62), est reliée à la deuxième entrée (64) du système (46) de séparation d'oxygène,
- le conduit de renvoi (80) débouchant dans la liaison entre la deuxième sortie (63) de l'échangeur de chaleur (62) et la deuxième entrée (64) du système (46) de séparation d'oxygène.

9. Installation de production d'électricité selon la revendication 8, **caractérisée en ce que** le conduit de dérivation (74) dérive de la liaison entre la première sortie (69) de l'échangeur de chaleur (62) et l'entrée (70) du brûleur (45).

10. Installation de production d'électricité selon l'une des revendications 7 à 9, **caractérisée en ce que** l'unité de combustion (6) présente au moins une pile à combustible (81),
- une première entrée (83) de la pile à combustion (81) étant reliée à la deuxième sortie (66) du système (46) de séparation d'oxygène,
- une première sortie (84) de la pile à combustible (81), qui communique avec la première entrée (83), est reliée à l'entrée (70) du brûleur (45),
- une deuxième entrée (85) de la pile à combustible (81) est reliée à la deuxième entrée (29) de l'unité de combustion (6) et
- une deuxième sortie (86) de la pile à combustible (81), qui communique avec la deuxième entrée (85) de la pile à combustible (81), est reliée à l'entrée (70) du brûleur (45).

11. Installation de production d'électricité selon la revendication 10, **caractérisée en ce qu'**un conduit de combustible (78), relié à l'entrée (73) du brûleur supplémentaire (72), dérive de la liaison entre la deuxième sortie (86) de la pile à combustible (81) et l'entrée (70) du brûleur (45).

12. Installation de production d'électricité selon les revendications 10 ou 11, **caractérisée en ce que** le conduit de dérivation (74) relié à l'entrée (73) du brûleur supplémentaire (72) dérive de la liaison entre la première sortie (84) de la pile à combustible (81) et l'entrée (70) du brûleur (45).

13. Installation de production d'électricité selon au moins la revendication 10, **caractérisée en ce que** la première entrée (83) de la pile à combustible (81) est reliée à la première sortie (69) de l'échangeur de chaleur (62).

14. Installation de production d'électricité selon au moins la revendication 10, **caractérisée en ce que** la pile à combustible (81) est configurée comme pile à combustible à haute température.
